# FASCICULE DE BREVET EUROPEEN

(11) **EP 1 712 806 B1**
(45) Date de publication et mention de la délivrance du brevet: **25.07.2012**
(21) Numéro de dépôt: 06112564.7
(22) Date de dépôt: 12.04.2006
(51) Int. Cl.: F16C 33/66, F02C 7/06, F01D 25/16, F16C 33/58

(54) **Agencement d'assemblage entre une bague intérieure de palier et un tourillon, bague et tourillon adaptés à un tel agencement, et turbomachine équipée de ceux-ci**
Montageanordnung zwischen einem Lagerinnenring und einem Zapfen, zur Anordnung geeigneter Lagerinnenring und Zapfen, und eine mit diesem ausgerüstete Turbomaschine
Assembly arrangement between an inner bearing ring and a trunnion, bearing ring and trunnion adapted to the arrangement, and a turbo machine equipped with them

(30) Priorité: 15.04.2005 FR 0550962
(43) Date de publication de la demande: 18.10.2006
(73) Titulaire: SNECMA, 75015 Paris (FR)
(72) Inventeur: Bouiller, Philippe Pierre Vincent, 77210 Samoreau (FR); Charier, Gilles, 77130 La Grande Paroisse (FR); Plona, Daniel Georges, 77870 Vulaines sur Seine (FR)
(74) Mandataire: Poulin, Gérard

(56) Documents cités:
- EP-A- 0 359 659
- GB-A- 2 382 386
- US-A- 3 985 458
- US-A- 5 183 342
- US-A- 5 685 650

## Description

### DOMAINE TECHNIQUE

La présente invention se rapporte à l'assemblage entre une bague intérieure d'un palier et un tourillon guidé en rotation par ce palier.

Elle vise un agencement d'assemblage permettant d'assembler la bague intérieure et le tourillon.

Elle vise une bague intérieure de palier adaptée pour un tel agencement d'assemblage, ainsi qu'un tourillon adapté pour un tel agencement d'assemblage.

Elle vise enfin une turbomachine équipée d'une telle bague intérieure de palier et/ou d'un tel tourillon et/ou équipée d'un tel agencement d'assemblage.

Dans tout ce qui suit, on utilisera le terme « tourillon » qui doit s'entendre comme toute pièce analogue ou appartenant à un arbre tournant.

### ÉTAT DE LA TECHNIQUE ANTÉRIEURE

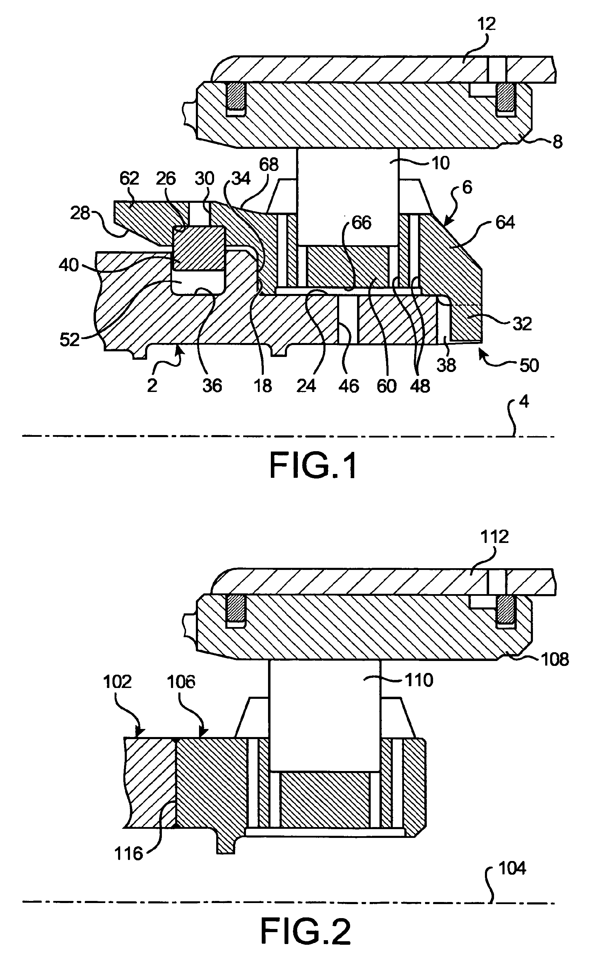

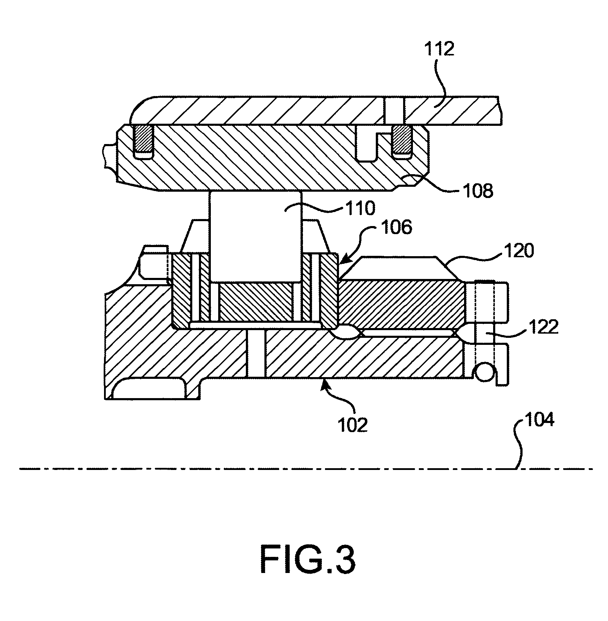

Les figures 2 et 3 illustrent, de manière schématique et en coupe axiale, respectivement deux agencements connus de l'assemblage entre un tourillon et une bague intérieure de palier. Dans ces deux exemples, le palier est un palier à rouleaux.

On entend par « coupe axiale » une coupe effectuée le long de l'axe longitudinal du tourillon. Sur ces deux figures, les éléments similaires portent des références numériques similaires.

La référence numérique 102 désigne un tourillon ayant un axe 104. Le tourillon 102 est supporté par un palier ayant une bague intérieure de palier 106 et une bague extérieure de palier 108. Entre la bague intérieure de palier 106 et la bague extérieure de palier 108 se trouvent des rouleaux 110. La bague extérieure de palier 108 est fixée sur une pièce fixe 112. La bague intérieure de palier 106 est fixée sur le tourillon 102.

La figure 2 illustre un agencement d'assemblage dans lequel la bague intérieure de palier 106 est fixée à une extrémité du tourillon 102 au moyen d'une soudure 116.

La bague intérieure de palier 106 constitue ici un prolongement du tourillon 102. En d'autres termes, cette configuration est analogue à une configuration dans laquelle les rouleaux 110 seraient directement incorporés sur le tourillon 102.

Un tel agencement d'assemblage par soudure présente des inconvénients. En effet, la bague intérieure de palier 106 et le tourillon 102 sont réalisés dans des matériaux différents. Il est souvent difficile d'effectuer une soudure solide entre deux pièces en matériaux différents. De plus, lorsqu'une telle soudure est effectuée, la durée de vie de l'assemblage n'est pas toujours satisfaisante.

La figure 3 illustre un agencement d'assemblage dans lequel la bague intérieure de palier 106 est montée en étant serrée axialement contre un épaulement 118 du tourillon 102, et fixée au moyen d'un écrou de serrage 120. Un dispositif anti-rotation 122 associé à l'écrou de serrage 120 empêche une rotation de ce dernier par rapport au tourillon 102.

Un tel assemblage mécanique par écrou de serrage ne présente pas l'inconvénient propre à un assemblage par soudure. Cependant il présente un autre inconvénient lié à l'encombrement de l'assemblage. En effet, dans les turbomachines destinées à recevoir de tels assemblages, il est de plus en plus nécessaire de limiter la longueur axiale du tourillon ou de l'arbre tournant. Or la présence de l'écrou de serrage 120 et de son dispositif anti-rotation 122 disposés à l'extrémité du tourillon 102, au-delà de la bague intérieure de palier 106, nécessite que la longueur axiale du tourillon 102 soit supérieure à la longueur axiale d'un tourillon 102 adapté à un assemblage par soudure.

Par ailleurs, le document EP 0 359 659 divulgue un agencement d'assemblage entre une bague intérieure d'un palier et un tourillon supporté en rotation dans ce palier conforme au préambule de la revendication 1.

### EXPOSÉ DE L'INVENTION

Un but de la présente invention est de fournir un agencement d'assemblage d'une bague intérieure et d'un tourillon, qui ne présente pas les inconvénients mentionnés ci-dessus.

Plus précisément, un but de la présente invention est de fournir un agencement d'assemblage qui soit mécanique et qui ne nécessite pas d'augmenter la longueur axiale du tourillon.

Dans tout ce qui suit la bague intérieure de palier », respectivement la « bague extérieure de palier », sera simplement appelée « bague intérieure », respectivement « bague extérieure ».

Selon un premier aspect, l'invention se rapporte à un agencement d'assemblage entre une bague intérieure d'un palier et un tourillon supporté en rotation dans ce palier, le tourillon ayant un axe. Cet agencement de palier comporte :
- une gorge annulaire de tourillon ménagée sur une face extérieure du tourillon et une gorge annulaire de bague ménagée sur une face intérieure de la bague intérieure, les deux gorges annulaires coopérant pour former un canal annulaire entre le tourillon et la bague intérieure lorsqu'elles sont disposées en regard l'une de l'autre,
- un jonc disposé dans le canal annulaire, qui empêche un déplacement relatif, en translation le long de l'axe du tourillon, entre le tourillon et la bague intérieure, et
- au moins un évidement dudit tourillon et au moins une dent de ladite bague intérieure, qui coopèrent pour empêcher un déplacement relatif, en rotation autour de l'axe du tourillon, entre le tourillon et la bague intérieure.

Chaque dent s'étend radialement vers l'intérieur à partir de la face intérieure de la bague intérieure.

Le au moins un évidement peut être un trou borgne du tourillon. Le au moins un évidement peut être une rainure longitudinale du tourillon.

De préférence, l'agencement d'assemblage comporte au moins une lumière reliant la gorge annulaire de bague à une face extérieure de la bague intérieure.

De préférence, le jonc est muni d'une fente pour faciliter sa mise en place dans le canal annulaire.

De préférence, la gorge annulaire de tourillon et le au moins un évidement sont disposés de part et d'autre d'au moins un conduit d'huile qui débouche sur une face extérieure du tourillon et qui amène de l'huile à la bague intérieure à travers le tourillon.

En outre, l'agencement d'assemblage comporte un chanfrein de la bague intérieure, au voisinage de la gorge annulaire de bague.

De manière optionnelle, l'agencement d'assemblage comporte un épaulement radial de bague et un épaulement radial de tourillon, qui coopèrent pour réaliser une butée axiale de la bague intérieure sur le tourillon.

Selon un deuxième aspect, l'invention se rapporte à une bague intérieure de palier adaptée pour un agencement d'assemblage entre cette bague intérieure et un tourillon, selon le premier aspect de l'invention. Le tourillon possède un axe. Cette bague comporte :
- un corps de bague destiné à coopérer avec une bague extérieure de palier,
- une première extrémité de bague comportant des premiers moyens d'assemblage de bague pour empêcher un déplacement relatif en translation le long de l'axe du tourillon, entre le tourillon et la bague intérieure, et
- une deuxième extrémité de bague comportant des deuxièmes moyens d'assemblage de bague pour empêcher un déplacement relatif en rotation, autour de l'axe du tourillon, entre le tourillon et la bague intérieure.

Les premiers moyens d'assemblage de bague comportent une gorge annulaire de bague ménagée sur une face intérieure de la bague intérieure.

Les premiers moyens d'assemblage de bague comportent aussi un chanfrein ménagé au bout de la première extrémité de bague, sur une face intérieure de la bague intérieure et au voisinage de la gorge annulaire de bague.

Les premiers moyens d'assemblage de bague comportent en outre au moins une lumière reliant la gorge annulaire de bague à une face extérieure de la bague intérieure.

Les deuxièmes moyens d'assemblage de bague comportent au moins une dent s'étendant radialement vers l'intérieur au bout de la deuxième extrémité de bague.

De manière optionnelle, la bague intérieure de palier comporte un épaulement radial de bague entre le corps de bague et la première extrémité de bague.

Selon un troisième aspect, l'invention se rapporte à un tourillon adapté pour un agencement d'assemblage entre cette bague intérieure et un tourillon, selon le premier aspect de l'invention. Le tourillon possède un axe. Il comporte :
- des premiers moyens d'assemblage de tourillon pour empêcher un déplacement relatif, en translation le long de l'axe du tourillon, entre le tourillon et la bague intérieure, et
- des deuxièmes moyens d'assemblage de tourillon pour empêcher un déplacement relatif, en rotation autour de l'axe du tourillon, entre le tourillon et la bague intérieure.

Les premiers moyens d'assemblage de tourillon comportent une gorge annulaire de tourillon ménagée sur une face extérieure du tourillon.

Les deuxièmes moyens d'assemblage de tourillon comportent au moins un évidement ménagé dans le tourillon.

Chaque évidement peut être par exemple un trou borgne du tourillon, ou encore une rainure longitudinale du tourillon.

De manière optionnelle, le tourillon comporte un épaulement radial de tourillon.

De préférence, le tourillon comporte au moins un conduit d'huile qui débouche sur une face extérieure dudit tourillon entre lesdits premiers moyens d'assemblage de tourillon et lesdits deuxièmes moyens d'assemblage de tourillon.

Selon un quatrième aspect, l'invention concerne une turbomachine, en particulier un moteur d'aéronef, est équipée d'un agencement d'assemblage selon le premier aspect, ou d'une bague intérieure de palier selon le deuxième aspect, ou d'un tourillon selon le troisième aspect.

L'agencement d'assemblage selon l'invention est particulièrement adapté lorsque l'on souhaite assembler une bague intérieure sur un tourillon vers une extrémité de celui-ci. Elle trouve un intérêt particulier lorsque l'on souhaite réduire la dimension axiale du tourillon. C'est le cas notamment lorsque l'extrémité du tourillon se trouve à proximité d'une autre pièce et que l'on souhaite éviter toute collision ou tout contact entre eux au cours du fonctionnement de la turbomachine.

### BRÈVE DESCRIPTION DES DESSINS

L'invention sera mieux comprise à la lecture de la description détaillée qui va suivre de modes de réalisation de l'invention, donnés à titre illustratif et nullement limitatif, en référence aux dessins annexés, dans lesquels :
- la figure 1 illustre de manière schématique et en coupe axiale un mode de réalisation d'un agencement d'assemblage entre une bague intérieure et un tourillon, selon l'invention ;
- la figure 2, déjà décrite, illustre de manière schématique et en coupe axiale un premier agencement connu d'assemblage entre une bague intérieure et un tourillon ;
- la figure 3, déjà décrite, illustre de manière schématique et en coupe axiale un second agencement connu d'assemblage entre une bague intérieure et un tourillon.

### EXPOSÉ DÉTAILLÉ DE MODES DE RÉALISATION PARTICULIERS

En se référant à la figure 1, il est représenté un agencement d'assemblage conforme à l'invention. Un tourillon 2 ayant un axe 4 est porté en rotation par un palier qui comporte une bague intérieure 6 et une bague extérieure 8. Sur l'exemple illustré, le palier est un roulement à rouleaux, et des rouleaux 10 sont disposés entre la bague extérieure 8 et la bague intérieure 6.

La bague extérieure de palier 8 est fixée sur une pièce fixe 12.

La bague intérieure 6 comporte un corps de bague 60, qui coopère avec la bague extérieure 8 par l'intermédiaire des rouleaux 10 pour assurer le roulement. Elle comporte aussi une première extrémité de bague 62 et une deuxième extrémité de bague 64, qui sont des parties annulaires s'étendant de part et d'autre du corps de bague 60 suivant la direction axiale. Elle comporte encore une face intérieure de bague 66 et une face extérieure de bague 68.

Le tourillon 2 comporte un axe 4, une face extérieure de tourillon 24 et une extrémité de tourillon 50.

Le tourillon 2 et la bague intérieure 6 sont assemblés entre eux au moyen de premiers moyens d'assemblage de bague 26, 28, 30, de deuxièmes moyens d'assemblage de bague 32, de premiers moyens d'assemblage de tourillon 36, de deuxièmes moyens d'assemblage de tourillon 38 et de moyens d'assemblage additionnels 40.

Les premiers moyens d'assemblage de bague 26, 28, 30 comportent une gorge annulaire de bague 26 ménagée sur la face intérieure de bague 66, au niveau de la première extrémité de bague 62.

Les premiers moyens d'assemblage de bague 26, 28, 30 comportent aussi un chanfrein 28 réalisé sur la face intérieure de bague 66, au bout de la première extrémité de bague 62 et au voisinage de la gorge annulaire de bague 26.

Les premiers moyens d'assemblage de bague 26, 28, 30 comportent encore au moins une lumière 30 qui traverse la bague intérieure 6 radialement. Chaque lumière 30 relie la gorge annulaire de bague 26 et la face extérieure de bague 68. Lorsque plusieurs lumières 30 sont présentes, elles peuvent être réparties radialement sur la bague intérieure 6.

Les deuxièmes moyens d'assemblage 32 de bague comportent au moins une dent 32, s'étendant radialement vers l'intérieur à partir de la face intérieure de bague 66 au niveau de la deuxième extrémité de bague 64. Il peut s'agir d'une dent 32 unique, ou bien d'une pluralité de dents 32 sensiblement réparties sur une circonférence de la face intérieure de bague 26, par exemple équidistantes les unes des autres.

Les premiers moyens d'assemblage de tourillon 36 comportent une gorge annulaire de tourillon 36 ménagée sur la face extérieure de tourillon 24.

Les deuxièmes moyens d'assemblage de tourillon 38 comportent au moins un évidement 38 du tourillon 2. Il peut s'agir d'un évidement 38 unique, ou bien d'une pluralité d'évidements 38 sensiblement répartis sur une circonférence de la face extérieure de tourillon 24, par exemple équidistants les uns des autres.

Chaque évidement 38 peut être par exemple un trou borgne usiné dans le tourillon 2, ou encore une rainure longitudinale usinée dans le tourillon 2.

De manière optionnelle, la bague intérieure comporte un épaulement de bague 34 s'étendant radialement entre le corps de bague 60 et la première extrémité de bague 62, et le tourillon comporte un épaulement de tourillon 18 s'étendant radialement. Sur l'exemple illustré, l'épaulement de bague 34 s'étend radialement vers l'intérieur et l'épaulement de tourillon 18 s'étend radialement vers l'extérieur.

L'agencement d'assemblage comporte des moyens d'assemblage additionnels 40 qui comportent un jonc 40.

Lorsque l'assemblage entre la bague intérieure 6 et le tourillon 2 est réalisé, la face intérieure de bague 66 se trouve en regard de la face extérieure de tourillon 24.

Lorsque l'assemblage entre la bague intérieure 6 et le tourillon 2 est réalisé, chaque dent 32 de la bague intérieure 6 se trouve en prise avec un évidement 38 correspondant du tourillon 2. Grâce à la coopération des dents 32 et des évidements 38, la bague intérieure 6 et le tourillon 2 sont empêchés de se déplacer en rotation axiale l'un par rapport à l'autre.

Lorsque l'assemblage entre la bague intérieure 6 et le tourillon 2 est réalisé, la gorge annulaire de bague 26 et la gorge annulaire de tourillon 36 coopèrent pour former un canal annulaire 52 dans lequel est inséré le jonc 40. Grâce à la coopération entre le jonc 40 et le canal annulaire 52, la bague intérieure 6 et le tourillon 2 sont empêchés de se déplacer en translation axiale l'un par rapport à l'autre.

En outre, le tourillon 2 est muni d'au moins un conduit d'huile de tourillon 46, disposé entre la gorge annulaire de tourillon 36 et le au moins un évidement 38, qui débouche sur la face extérieure de tourillon 24 afin d'amener de l'huile à la bague intérieure 6 à travers le tourillon 2. Egalement, la bague intérieure 6 est munie de conduits d'huile de bague 48, qui la traversent radialement, afin d'amener de l'huile aux rouleaux 10.

Le montage de l'agencement d'assemblage comporte les deux opérations décrites ci-après.

Au cours d'une première opération, on insère le jonc 40 dans la gorge annulaire de tourillon 36. De préférence, le jonc 40 est muni d'une fente (non représentée) pour faciliter sa mise en place dans la gorge annulaire de tourillon 36. Cette fente peut être orientée suivant la direction radiale du jonc 40, ou obliquement par rapport à cette direction radiale.

Au cours d'une deuxième opération, on introduit la bague intérieure 6 sur le tourillon 2 par l'extrémité de tourillon 50. La présence du chanfrein 28 sur la bague intérieure 6 permet de faciliter l'engagement de la bague intérieure 6 au-dessus du jonc 40.

Dans le cas où la bague intérieure 6 et le tourillon 2 sont dotés d'épaulements respectifs 34 et 18, ceux-ci se trouvent en contact l'un contre l'autre et servent de butée axiale à la bague intérieure 6 sur le tourillon 2 suivant la direction d'introduction.

En fonctionnement, la rotation provoque une expansion du jonc 40 qui s'appuie contre la gorge annulaire de bague 26.

Le démontage de l'agencement d'assemblage comporte l'opération suivante : on rétracte le jonc 40 dans la gorge annulaire de tourillon 36 au moyen d'un outil adapté. Par exemple, on peut utiliser un outil comportant des pions ou des ergots qui pénètrent dans les lumières 30 de la bague intérieure 6 et repoussent le jonc 40. Simultanément on dégage la bague intérieure 6 du tourillon 2 en direction de l'extrémité de tourillon 50.

## Revendications

1. Agencement d'assemblage entre une bague intérieure (6) d'un palier et un tourillon (2) supporté en rotation dans ce palier, ledit tourillon (2) ayant un axe (4), **caractérisé en ce qu'**il comporte :
- une gorge annulaire de tourillon (36) ménagée sur une face extérieure (24) dudit tourillon (2) et une gorge annulaire de bague (26) ménagée sur une face intérieure (66) de ladite bague intérieure (6), lesdites deux gorges annulaires (26, 36) coopérant pour former un canal annulaire (52) entre ledit tourillon (2) et ladite bague intérieure (6) lorsqu'elles sont disposées en regard l'une de l'autre,
- un jonc (40) disposé dans ledit canal annulaire (52), qui empêche un déplacement relatif, en translation le long dudit axe (4), entre ledit tourillon (2) et ladite bague intérieure (6), et
- au moins un évidement (38) dudit tourillon (2) et au moins une dent (32) de ladite bague intérieure (6), qui coopèrent pour empêcher un déplacement relatif, en rotation autour de dudit axe (4), entre ledit tourillon (2) et ladite bague intérieure (6).

2. Agencement d'assemblage selon la revendication 1, **caractérisé en ce que** chaque dent (32) s'étend radialement vers l'intérieur à partir de la face intérieure (66) de la bague intérieure (6).

3. Agencement d'assemblage selon la revendication 1 ou 2, **caractérisé en ce que** chaque évidement (38) consiste en un trou borgne du tourillon (2).

4. Agencement d'assemblage selon la revendication 1 ou 2, **caractérisé en ce que** chaque évidement (38) consiste en une rainure longitudinale du tourillon (2).

5. Agencement d'assemblage selon l'une quelconque des revendications 1 à 4, **caractérisé en ce qu'**il comporte au moins une lumière (30) reliant ladite gorge annulaire de bague (26) à une face extérieure (68) de ladite bague intérieure (6).

6. Agencement d'assemblage selon l'une quelconque des revendications 1 à 5, **caractérisé en ce que** ledit jonc (40) est muni d'une fente pour faciliter sa mise en place dans ledit canal annulaire (52).

7. Agencement d'assemblage selon l'une quelconque des revendications 1 à 6, **caractérisé en ce que** ladite gorge annulaire de tourillon (36) et ledit au moins un évidement (38) sont disposés de part et d'autre d'au moins un conduit d'huile (46) qui débouche sur une face extérieure (24) du tourillon (2) et amène de l'huile à ladite bague intérieure (6) à travers ledit tourillon (2).

8. Agencement d'assemblage selon l'une quelconque des revendications 1 à 7, **caractérisé en ce qu'**il comporte un chanfrein (28) de la bague intérieure (6), au voisinage de la gorge annulaire de bague (26).

9. Agencement d'assemblage selon l'une quelconque des revendications 1 à 8, **caractérisé en ce qu'**il comporte un épaulement radial de bague (34) et un épaulement radial de tourillon (18), qui coopèrent pour réaliser une butée axiale de ladite bague intérieure (6) sur ledit tourillon (2).

10. Agencement d'assemblage selon l'une quelconque des revendications 1 à 9 muni d'une bague intérieure de palier (6) **caractérisé en ce que** la bague (6) comporte :
- un corps de bague (60) destiné à coopérer avec une bague extérieure de palier (8),
- une première extrémité de bague (62) comportant des premiers moyens d'assemblage de bague (26, 28, 30) pour empêcher un déplacement relatif, en translation le long dudit axe (4), entre ledit tourillon (2) et ladite bague intérieure (6), et
- une deuxième extrémité de bague (64) comportant des deuxièmes moyens d'assemblage de bague (32) pour empêcher un déplacement relatif, en rotation autour dudit axe (4), entre ledit tourillon (2) et ladite bague intérieure (6).

11. Agencement selon la revendication 10, **caractérisé en ce que** le chanfrein (28) est ménagé au bout de ladite première extrémité de bague (62), sur une face intérieure (66) de ladite bague intérieure (6).

12. Agencement selon l'une quelconque des revendications 10 et 11, **caractérisé en ce que** la ou lesdites dents (32) s'étendent radialement vers l'intérieur au bout de la deuxième extrémité de bague (64).

13. Agencement selon l'une quelconque des revendications 10 à 12 en combinaison avec la revendication 9, **caractérisé en ce que** l'épaulement radial de bague (34) est situé entre le corps de bague (60) et la première extrémité de bague (62).

14. Agencement d'assemblage selon l'une quelconque des revendications 1 à 9 muni d'un tourillon (2) **caractérisé en ce que** le tourillon comporte :
- des premiers moyens d'assemblage de tourillon (36) pour empêcher un déplacement relatif, en translation le long dudit axe (4), entre ledit tourillon (2) et ladite bague intérieure (6), et
- des deuxièmes moyens d'assemblage de tourillon (38) pour empêcher un déplacement relatif, en rotation autour dudit axe (4), entre ledit tourillon (2) et ladite bague intérieure (6).

15. Agencement selon la revendication 14, **caractérisé en ce qu'**un conduit d'huile (46) débouche entre lesdits premiers moyens d'assemblage de tourillon (36) et lesdits deuxièmes moyens d'assemblage de tourillon (38).

16. Turbomachine, en particulier moteur d'aéronef, **caractérisée en ce qu'**elle est équipée d'un agencement d'assemblage selon l'une quelconque des revendication 1 à 9.

17. Turbomachine, en particulier moteur d'aéronef, **caractérisée en ce qu'**elle est équipée d'une bague intérieure de palier (6) selon l'une quelconque des revendication 10 à 13.

18. Turbomachine, en particulier moteur d'aéronef, **caractérisée en ce qu'**elle est équipée d'un tourillon (2) selon l'une quelconque des revendications 14 à 15.

## Claims

1. Assembly arrangement between an inner race (6) of a bearing and a journal (2) supported in rotation in this bearing, the said journal (2) having an axis (4), **characterized in that** it comprises:
- a journal annular groove (36) made on an outer face (24) of the said journal (2) and a race annular groove (26) made on an inner face (66) of the said inner race (6), the said two annular grooves (26, 36) interacting to form an annular channel (52) between the said journal (2) and the said inner race (6) when they are placed opposite one another,
- a retaining ring (40) placed in the said annular channel (52), which prevents a relative movement, in translation along the said axis (4), between the said journal (2) and the said inner race (6), and
- at least one recess (38) of the said journal (2) and at least one tooth (32) of the said inner race (6), which interact to prevent a relative movement, in rotation about the said axis (4), between the said journal (2) and the said inner race (6).

2. Assembly arrangement according to Claim 1, wherein each tooth (32) extends radially inwards from the inner face (66) of the inner race (6).

3. Assembly arrangement according to Claim 1 or Claim 2, wherein each recess (38) consists of a blind hole of the journal (2).

4. Assembly arrangement according to Claim 1 or Claim 2, wherein each recess (38) consists of a longitudinal groove of the journal (2).

5. Assembly arrangement according to any of Claims 1 to 4, wherein it comprises at least one opening (30) connecting the said race annular groove (26) to an outer face (68) of the said inner race (6).

6. Assembly arrangement according to any of Claims 1 to 5, wherein the said retaining ring (40) is furnished with a split to make it easier to insert in the said annular channel (52).

7. Assembly arrangement according to any of Claims 1 to 6, wherein the said journal annular groove (36) and the said at least one recess (38) are placed either side of at least one oil duct (46) which opens onto an outer face (24) of the journal (2) and carries oil to the said inner race (6) through the said journal (2).

8. Assembly arrangement according to any of Claims 1 to 7, wherein it comprises a bevel (28) of the inner race (6), in the vicinity of the race annular groove (26).

9. Assembly arrangement according to any of Claims 1 to 8, wherein it comprises a race radial shoulder (34) and a journal radial shoulder (18), which interact to produce an axial abutment of the said inner race (6) on the said journal (2).

10. Assembly arrangement according to any of Claims 1 to 9 provided with a bearing inner race (6) **characterized in that** said inner race comprises:
- a race body (60) designed to interact with a bearing outer race (8),
- a first race end (62) comprising first race assembly means (26, 28, 30), to prevent a relative movement, in translation along the said axis (4), between the said journal (2) and the said inner race (6), and
- a second race end (64) comprising second race assembly means (32) for preventing a relative movement, in rotation about the said axis (4), between the said journal (2) and the said inner race (6)

11. Assembly arrangement according to Claim 10, **characterized in that** the bevel (28) is made at the extremity of the said first race end (62), on an inner face (66) of the said inner race (6).

12. Assembly arrangement according to Claim 10 or Claim 11, wherein the tooth or the tooths (32) extend(s) radially inwards at the extremity of the second race end (64).

13. Assembly arrangement according to any of Claim 10 to 12 in combination with Claim 9, wherein the race radial shoulder (34) is located between the race body (60) and the first race end (62).

14. Assembly arrangement according to any of Claims 1 to 9 provided with a journal (2), wherein the journal comprises:
- first journal assembly means (36) for preventing a relative movement, in translation along the said axis (4), between the said journal (2) and the said inner race (6), and
- second journal assembly means (38) for preventing a relative movement, in rotation about the said axis (4), between the said journal (2) and the said inner race (6).

15. Assembly arrangement according to Claim 14, wherein one oil duct (46) opens between the said first journal assembly means (36) and the said second journal assembly means (38).

16. Turbomachine, in particular an aircraft engine, wherein it is fitted with an assembly arrangement according to any of Claims 1 to 9.

17. Turbomachine, in particular an aircraft engine, wherein it is fitted with a bearing inner race (6) according to any of Claims 10 to 13.

18. Turbomachine, in particular an aircraft engine, wherein it is fitted with a journal (2) according to any of Claims 14 to 15.

## Patentansprüche

1. Anordnung für die Verbindung zwischen einem Innenring (6) eines Lagers und einem in diesem Lager drehgelagerten Lagerzapfen (2), wobei der Lagerzapfen (2) eine Achse (4) aufweist, **dadurch gekennzeichnet, dass** sie umfasst:
- eine ringförmige Lagerzapfennut (36), die an einer Außenseite (24) des Lagerzapfens (2) ausgebildet ist, sowie eine ringförmige Ringnut (26), die an einer Innenseite (66) des Innenrings (6) ausgebildet ist, wobei die beiden ringförmigen Nuten (26, 36) zusammenwirken, um einen ringförmige Kanal (52) zwischen dem Lagerzapfen (2) und dem Innenring (6) zu bilden, wenn sie einander gegenüberliegend angeordnet sind,
- eine in dem ringförmigen Kanal (52) angeordnete Stange (40), die eine relative Verschiebebewegung entlang der Achse (4), zwischen dem Lagerzapfen (2) und dem Innenring (6) verhindert, sowie
- wenigstens eine Ausnehmung (38) des Lagerzapfens (2) und wenigstens einen Zahn (32) des Innenrings (6), die zusammenwirken, um eine relative Drehbewegung um die Achse (4), zwischen dem Lagerzapfen (2) und dem Innenring (6) zu verhindern.

2. Verbindungsanordnung nach Anspruch 1, **dadurch gekennzeichnet, dass** jeder Zahn (32) sich von der Innenseite (66) des Innenrings (6) aus radial nach innen erstreckt.

3. Verbindungsanordnung nach Anspruch 1 oder 2, **dadurch gekennzeichnet, dass** jede Ausnehmung (38) aus einem Sackloch des Lagerzapfens (2) besteht.

4. Verbindungsanordnung nach Anspruch 1 oder 2, **dadurch gekennzeichnet, dass** jede Ausnehmung (38) aus einer Längsnut des Lagerzapfens (2) besteht.

5. Verbindungsanordnung nach einem der Ansprüche 1 bis 4, **dadurch gekennzeichnet, dass** sie wenigstens ein Schlitzloch (30) aufweist, das die ringförmige Ringnut (26) mit einer Außenseite (68) des Innenrings (6) verbindet.

6. Verbindungsanordnung nach einem der Ansprüche 1 bis 5, **dadurch gekennzeichnet, dass** die Stange (40) mit einem Schlitz versehen ist, um ihr Anbringen in dem ringförmigen Kanal (52) zu erleichtern.

7. Verbindungsanordnung nach einem der Ansprüche 1 bis 6, **dadurch gekennzeichnet, dass** die ringförmige Lagerzapfennut (36) und die wenigstens eine Ausnehmung (38) auf beiden Seiten wenigstens einer Ölleitung (46) angeordnet sind, die an einer Außenseite (24) des Lagerzapfens (2) ausmündet und dem Innenring (6) über den Lagerzapfen (2) Öl zuführt.

8. Verbindungsanordnung nach einem der Ansprüche 1 bis 7, **dadurch gekennzeichnet, dass** sie eine Fase (28) des Innenrings (6) in der Nähe der ringförmigen Ringnut (26) aufweist.

9. Verbindungsanordnung nach einem der Ansprüche 1 bis 8, **dadurch gekennzeichnet, dass** sie eine radiale Ringschulter (34) sowie eine radiale Lagerzapfenschulter (18) umfasst, die zusammenwirken, um einen Axialanschlag des Innenringes (6) an dem Lagerzapfen (2) zu schaffen.

10. Verbindungsanordnung nach einem der Ansprüche 1 bis 9, die mit einem Lagerinnenring (6) versehen ist, **dadurch gekennzeichnet, dass** der Ring (6) umfasst:
- einen Ringkörper (60), der dazu bestimmt ist, mit einem Lageraußenring (8) zusammenzuwirken,
- ein erstes Ringende (62) mit ersten Ringverbindungsmitteln (26, 28, 30), um eine relative Verschiebebewegung entlang der Achse (4), zwischen dem Lagerzapfen (2) und dem Innenring (6) zu verhindern, und
- ein zweites Ringende (64) mit zweiten Ringverbindungsmitteln (32), um eine relative Drehbewegung um die Achse (4), zwischen dem Lagerzapfen (2) und dem Innenring (6) zu verhindern.

11. Anordnung nach Anspruch 10, **dadurch gekennzeichnet, dass** die Fase (28) am Ende des ersten Ringendes (62), an einer Innenseite (66) des Innenrings (6) ausgebildet ist.

12. Anordnung nach einem der Ansprüche 10 und 11, **dadurch gekennzeichnet, dass** sich der oder die Zähne (32) am Ende des zweiten Ringendes (64) radial nach innen erstrecken.

13. Anordnung nach einem der Ansprüche 10 bis 12 in Kombination mit Anspruch 9, **dadurch gekennzeichnet, dass** die radiale Ringschulter (34) zwischen dem Ringkörper (60) und dem ersten Ringende (62) gelegen ist.

14. Verbindungsanordnung nach einem der Ansprüche 1 bis 9, die mit einem Lagerzapfen (2) versehen ist, **dadurch gekennzeichnet, dass** der Lagerzapfen umfasst:
- erste Lagerzapfenverbindungsmittel (36), um eine relative Verschiebebewegung entlang der Achse (4), zwischen dem Lagerzapfen (2) und dem Innenring (6) zu verhindern, sowie
- zweite Lagerzapfenverbindungsmittel (38), um eine relative Drehbewegung um die Achse (4), zwischen dem Lagerzapfen (2) und dem Innenring (6) zu verhindern.

15. Anordnung nach Anspruch 14, **dadurch gekennzeichnet, dass** eine Ölleitung (46) zwischen den ersten Lagerzapfenverbindungsmitteln (36) und den zweiten Lagerzapfenverbindungsmitteln (38) ausmündet.

16. Turbomaschine, insbesondere Flugzeugtriebwerk, **dadurch gekennzeichnet, dass** sie mit einer Verbindungsanordnung nach einem der Ansprüche 1 bis 9 ausgerüstet ist.

17. Turbomaschine, insbesondere Flugzeugtriebwerk, **dadurch gekennzeichnet, dass** sie mit einem Lagerinnenring (6) nach einem der Ansprüche 10 bis 13 ausgerüstet ist.

18. Turbomaschine, insbesondere Flugzeugtriebwerk, **dadurch gekennzeichnet**, das sie mit einem Lagerzapfen (2) nach einem der Ansprüche 14 bis 15 ausgerüstet ist.
